# EUROPEAN PATENT SPECIFICATION

(11) **EP 4 288 331 B1**
(45) Date of publication and mention of the grant of the patent: **08.04.2026**
(21) Application number: 22702794.3
(22) Date of filing: 03.02.2022
(51) Int. Cl.: B62K 5/08, B62K 5/10

(54) **ROLLING MECHANISM OF A STRADDLE-TYPE VEHICLE**
ROLLMECHANISMUS EINES GRÄTSCHSITZFAHRZEUGS
MÉCANISME DE ROULEMENT D'UN VÉHICULE DU TYPE À SELLE

(30) Priority: 05.02.2021 IT 202100002552
(43) Date of publication of application: 13.12.2023
(73) Proprietor: Piaggio & C. S.P.A., 56025 Pontedera Pisa (IT)
(72) Inventor: RAFFAELLI, Andrea, 56025 Pontedera (PI) (IT)
(74) Representative: Mannucci, Michele
(86) International application number: PCT/IB2022/050946
(87) International publication number: WO 2022/167968

(56) References cited:
- EP-A1- 3 434 570
- CN-B- 102 092 435
- JP-A- 2012 047 251
- US-A1- 2013 161 919

## Description

### Technical field

The present invention relates to the field of motor vehicles, that is straddle-type vehicles, of the rolling type, that is provided with a rolling motion about a median axis which extends longitudinally along the vehicle. Rolling motor vehicles are typically three-or four-wheeled motorcycles, with two steering front wheels and one or two rear drive wheels. The rolling motion allows the motor vehicle to tilt during motion, for example when negotiating a curve.

### State of the art

In the field of motor vehicles, there is an increasing offer of vehicles which combine the peculiarity of motorcycles, in terms of manoeuvrability, with the stability of four-wheeled vehicles. CN 102 092 435 B discloses the features of the preamble of claim 1.

These models are represented, for example, by three- or four-wheeled motor vehicles with two front steering wheels and one or two rear drive wheels.

In greater detail, the aforementioned motor vehicles are provided with two steering front wheels, that is configured to steer the vehicle controlled by means of the handlebar by the driver, and rolling wheels, that is tilting or inclinable laterally with a rolling motion, in other words, an oscillating motion about an axis substantially oriented in the direction of travel. These rolling motor vehicles also comprise one (or two) rear drive wheel, mechanically connected to the engine and having the purpose of supplying the drive torque and therefore allowing traction, while the front wheels, paired, have the purpose of providing the directionality of the vehicle.

Besides steering, the paired front wheels can also roll. Thanks to this solution, with respect to a motor vehicle with only two wheels, the motor vehicles with two wheels paired on the forecarriage have a greater stability provided by the double resting of the front wheels to the ground, similar to that provided by a car.

The front wheels are kinematically connected to each other by means of kinematic mechanisms which ensure that the wheels substantially roll and steer in a synchronous manner, for example by interposing articulated quadrilaterals which link the front wheels to a forecarriage frame. These motor vehicles are also provided with a wheel suspension system, mostly two suspensions, one for each front drive wheel. Each suspension is provided with an elastic element (spring) and a viscous element (shock absorber).

The object of rolling motor vehicles is therefore to guarantee the user the manoeuvrability of a two-wheeled motorcycle and, at the same time, the stability and safety of a four-wheeled motor vehicle.

A three-wheeled rolling motor vehicle of this type is described, for example, in WO-2017/115294, WO-2017/115295, WO-2017/115296, WO-2017/115297.

Rolling motor vehicles with two steering front wheels have a suspension system associated with the wheels. Typically, there may be a double suspension, that is a suspension system with a first left shock absorber or suspension assembly and a second right shock absorber or suspension assembly associated with the left front wheel and the right front wheel, respectively.

For example, the quadrilateral may consist of two crosspieces hinged to the frame of the vehicle and two uprights hinged to the ends of the two crosspieces. The shock absorber assemblies with the wheels are connected to respective uprights of the quadrilateral.

Although not directly connected to each other, being constrained to corresponding uprights of the articulated quadrilateral, the two shock absorber assemblies are not entirely independent. For this reason, an impact on a wheel can excite the resonance of the quadrilateral and lead to an alternating vibration of the wheels which, being not otherwise damped, could lead to dramatic breaks in the supporting structure.

An actual independence of the suspensions would allow an improved control of the vehicle in the event of an uneven surface and it would guarantee protection against possible destructive resonance frequencies. However, such actual independence is not possible for rolling vehicles, given that the wheels are necessarily connected to the articulated quadrilateral which allows the rolling of the vehicle.

To limit this phenomenon, some solutions provide for increasing the inertia of the members of the articulated quadrilateral, increasing the dimensions and weight thereof, going well beyond the requirements of rigidity and resistance of the members.

An oversizing of these components necessarily entails an increase in the weight of the motor vehicle, a lower manoeuvrability thereof and, last but not least, an increase in the manufacturing costs.

### Summary

An object of the present invention is therefore to overcome the aforementioned problems related with rolling motor vehicles provided with an articulated quadrilateral.

In particular, an important object of the present invention is to provide a rolling kinematic mechanism of a straddle-type vehicle, and a rolling motor vehicle, which allows to reduce the phenomenon related with alternating vibration of the wheels associated with an articulated quadrilateral in case of an uneven surface.

Another important object of the present invention is to provide a rolling kinematic mechanism of a straddle-type vehicle, and a rolling motor vehicle, which allows to improve the stability of the motor vehicle when riding.

Still another important object of the present invention is to provide a rolling kinematic mechanism of a straddle-type vehicle, and a rolling motor vehicle, capable of allowing to reduce the weight and/or dimensions of the vehicle.

These and other objects, which will be more apparent hereinafter, are attained by a rolling kinematic mechanism of a straddle-type vehicle having at least three wheels comprising:
- at least one forecarriage or rear axle articulated quadrilateral, configured to be connected to a frame of a straddle-type vehicle, wherein the articulated quadrilateral supports - by means of a first support member and a second support member - respectively a first wheel and a second wheel,
- at least one inerter device arranged between the frame of the straddle-type vehicle and the forecarriage or rear axle articulated quadrilateral, so that the at least one inerter device provides resistance to the relative movement of the at least articulated quadrilateral which is a function of the relative acceleration between the articulated quadrilateral and the frame.

An inerter device is a device known since 2002. The term "inerter" was originally coined in the publication "Synthesis of Mechanical Networks: The Inerter "(M.C. Smith, IEEE Transactions on Automatic Control, Volume 47, issue 10, pages 1648-1662, October 2002).

Basically, an inerter is a device interposed between two parts in relative movement and it has the function of creating resistance to motion as a function of the relative acceleration between the two parts in motion. A low relative acceleration leads to a lower resistance to motion with respect to a high relative acceleration.

Many types of inerters - mechanical, fluid-based, hydraulic, electromechanical, magnetic and combinations thereof - have been developed over the years.

A mechanical inerter provides for an inertial mass, such as for example a flywheel, kinematically connected - by means of a kinematic transmission of various types - with one of the two parts in motion to which the inerter is connected, and which is driven in motion by the relative movement of these parts, and which therefore provides resistance to relative movement of the two parts which is a function of relative acceleration between them. Systems of this type were originally described in the aforementioned publication and in the patent US7316303.

A hydraulic inerter for example provides for a hydraulic cylinder with a piston which partitions the cylinder into two chambers containing a fluid, respectively connected with a hydraulic motor which converts the movement of the fluid between the chambers into a rotary motion, in turn connected - by means of a kinematic transmission - to a flywheel, which provides resistance to the movement of the fluid and therefore of the piston, which is a function of the relative acceleration between the piston and the cylinder. For example, an inerter of this type is shown in US2009/0139225 as well as in US7316303.

A fluid-based inerter for example provides for a hydraulic cylinder with a piston which partitions the cylinder into two chambers containing a fluid, generally not a Newtonian fluid, and placed in mutual communication by means of channels. The movement of the piston displaces the fluid between the two chambers, with the fluid providing inertia to the movement, providing resistance to the movement of the piston which is a function of the relative acceleration between the piston and cylinder. For example, an inerter of this type is shown in US2013/0032442.

According to the invention, in rolling motor vehicles with two steering wheels, the use of an inerter between the forecarriage frame and the articulated quadrilateral carrying the two front wheels allows to stiffen the quadrilateral in case of impacts to the wheels, avoiding the phenomenon of alternating vibration of the wheels and, as a result, the risk of breakage due to the resonance vibration of the wheels.

Similarly, there is an effect of reducing or eliminating the vibration phenomenon also in the case of the application of the inerter between the frame and a rear axle articulated quadrilateral of the straddle-type vehicle.

In preferred embodiments, the articulated quadrilateral is configured to be connected to a portion of the frame of the straddle-type vehicle forming the forecarriage frame of said vehicle; preferably at least one inerter device inerter device is configured to be arranged between said forecarriage frame of the straddle-type vehicle and the forecarriage articulated quadrilateral. Preferably, provided for is a steering device, constrained to the forecarriage frame and operatively connected to the first support member and to the second support member to allow the steering of said wheels.

In preferred embodiments, the articulated quadrilateral is configured to be connected to a portion of the frame of the straddle-type vehicle which forming the rear axle frame of the straddle-type vehicle.

In the case of a suspension system which provides for a suspension assembly for each wheel, the inerter basically allows - due to this stiffening of the quadrilateral - to make the two assemblies independent.

Therefore, according to preferred embodiments, the kinematic mechanism provides for a suspension system which allows a sussultatory motion of the first wheel and of the second wheel with respect to at least one part of the at least one articulated quadrilateral.

According to preferred embodiments, an inerter device comprises two connection portions: a first connection portion is constrained to the frame of the straddle-type vehicle (forecarriage frame or frame relative to the rear axle part) and a second connection portion is connected to the at least one quadrilateral, so that the inert device provides resistance to the relative movement of the at least articulated quadrilateral which is a function of the relative acceleration of the two connection portions.

In preferred embodiments, the kinematic mechanism provides for - at the forecarriage and/or rear axles - a single articulated quadrilateral comprising a pair of crosspieces, each hinged to the frame of the straddle-type vehicle by means of respective median hinges so as to be able to oscillate about parallel axes and preferably substantially lying on a centreline plane of the frame, and a pair of uprights, each hinged to a corresponding part of the two crosspieces by means of hinges defining rotation axes parallel to the axes about which the crosspieces rotate; in this configuration, the inerter is arranged with a first connection portion constrained to the frame and a second connection portion constrained to a crosspiece or to an upright; preferably, in the case of a quadrilateral relative to the forecarriage of the vehicle, the at least one inerter is arranged with a first connection portion constrained to the forecarriage frame.

In other embodiments, differently the forecarriage provides for a double articulated quadrilateral having a shared upright formed by the frame of the straddle-type vehicle, and wherein each articulated quadrilateral comprises a pair of crosspieces hinged, for a respective end, to the frame so as to be able to oscillate about parallel axes, and an upright articulated at the ends of the crosspieces opposite to those for hinging to the frame; the axis for hinging the crosspieces to the frame of the two quadrilaterals is the same for the corresponding crosspieces of each quadrilateral. In this configuration there are two inerter devices, each interposed between the frame and a respective articulated quadrilateral. Preferably, in the case of quadrilaterals relating to the forecarriage of the vehicle, the two inerters are associated with the forecarriage frame.

In the claimed embodiments, the inerter device is of the linear type and it provides for a connection portion constrained, preferably hinged, to the frame of the straddle-type vehicle and an opposite connection portion constrained, preferably hinged, to said articulated quadrilateral, wherein the connection portions are configured to move with respect to each other preferably according to a rectilinear direction. Preferably, in the case of a quadrilateral relating to the forecarriage of the vehicle, the at least one inerter is arranged with a connection portion constrained to the forecarriage frame.

In the claimed embodiment, the inerter device comprises a box-like body provided for on which is a said connection portion, and wherein articulated in said box-like body is a rotary flywheel, kinematically connected - by means of a kinematic transmission assembly, preferably of the gear type - to a translating element provided for on which is the other connection portion, so that a motion of the articulated quadrilateral with respect to the frame of the straddle-type vehicle corresponds to a relative translation of said translating element in the box-like body with ensuing rotation of the flywheel, with a transmission ratio configured to multiply the angular motion of the flywheel.

According to preferred embodiments, inerter device is of the rotary type and it provides for a connection portion constrained to the frame of the straddle-type vehicle and an opposite connection portion constrained to the articulated quadrilateral, wherein said connection portions have a relative rotary motion relative to each other. Preferably, in the case of a quadrilateral relating to the forecarriage of the vehicle, the inerter device is arranged with a connection portion constrained to the forecarriage frame.

Preferably, the inerter device is of the rotary type and
- a first operative connection portion is associated with the pivoting seat of a flywheel provided for on a crosspiece of the quadrilateral hinged to the frame of the straddle-type vehicle, while the second connection portion is a gearwheel fixed to the frame of the vehicle, preferably coaxial to the axis for hinging the crosspiece to the frame, wherein the flywheel is kinematically connected - by means of a transmission assembly, preferably of the gear type - to the gearwheel, hence a rotation of the flywheel - with a transmission ratio configured to multiply the angular motion of the flywheel - corresponds to a rotation of the crosspiece about the axis thereof for hinging to the frame;
   or
- a first operative connection portion is a gearwheel fixed on a crosspiece of the quadrilateral hinged to the frame of the straddle-type vehicle (such gearwheel is preferably coaxial to the axis for hinging the crosspiece to the frame), and a second operative connection portion is the seat for pivoting a flywheel to the frame; suitably, the flywheel is kinematically connected - by means of a transmission assembly, preferably of the gear type - to the aforementioned gearwheel, hence a rotation of the flywheel, with transmission ratio configured to multiply the angular motion of the flywheel, corresponds to a rotation of the crosspiece about the axis thereof for hinging to the frame of the vehicle.

According to preferred embodiments, the inerter device comprises an apparatus for adjusting the value of resistance to the relative movement of the connection portions thereof.

Preferably, such apparatus for adjusting the value of resistance to the relative movement of the connection portions provides for the adjustment of the inertial mass of the flywheel, for example by adding or removing mass to/from the flywheel. In other embodiments, adjusting the value of resistance to the relative movement of the connection portions may provide for a change in the transmission ratio in the kinematic chain between the flywheel and one of the connection portions.

According to another aspect, the invention also relates to a rolling straddle-type vehicle, comprising at least one kinematic mechanism according to one or more of the embodiments and examples described above. For example, the invention relates to a straddle-type vehicle with an aforementioned kinematic mechanism associated with the forecarriage of the vehicle, or with at least one articulated quadrilateral constrained to the forecarriage frame, or a motor vehicle with such a kinematic mechanism constrained to the rear axle of the vehicle, or at least one articulated quadrilateral constrained to the rear portion of the frame, or the rear axle frame portion. In other embodiments the straddle-type vehicle may comprise at least one articulated quadrilateral associated with the forecarriage frame and at least one articulated quadrilateral associated with the rear axle.

Preferably, the straddle-type vehicle is of the type with two steering front wheels.

In other examples, the straddle-type vehicle comprises a single steering front wheel and a pair of rear axle wheels associated with an articulated quadrilateral in a kinematic mechanism as described above.

It has been pointed out that, according to the invention, an inerter device is interposed between the forecarriage frame and an articulated quadrilateral associated with the forecarriage, and between the rear axle frame or a rear portion of the frame) and an articulated quadrilateral associated with the rear axle. It is clear that given that forecarriage or rear axle frame, is integrally joined with rest of the frame of the vehicle, according to the invention the inerter device may be equivalently interposed between an articulated quadrilateral of the forecarriage or of the rear axle and any part of the frame of the vehicle integrally joined (or rigidly connected) with the forecarriage or rear axle frame.

### Brief description of the drawings

The invention will be clearer from the description and the attached drawings, which illustrate several embodiments of the invention provided by way of non-limiting example. More particularly, in the drawing:
Fig. 1 shows a front axonometric view of a structure of rolling straddle-type vehicle with two steering front wheels, according to the invention, with part of the structure shown in a simplified and schematic form;
Fig. 2 shows a diagram of a forecarriage of a vehicle like in figure 1;
Fig. 3 shows a schematic view of a mechanical inerter, of the linear type, to be used in a straddle-type vehicle according to the invention;
Fig. 4 shows a front axonometric view of a structure of a rolling straddle-type vehicle, with two steering front wheels, according to the invention, varying with respect to the vehicle of figure 1;
Fig. 5 shows a schematic view of a portion of the mechanical inerter, of the rotary type, to be used in a vehicle with kinematic mechanism according to the invention;
Fig. 6 shows a front axonometric view of a structure of a rolling vehicle con with two steering front wheels, according to the invention, varying with respect to the motor vehicles of figure 1 and 4;

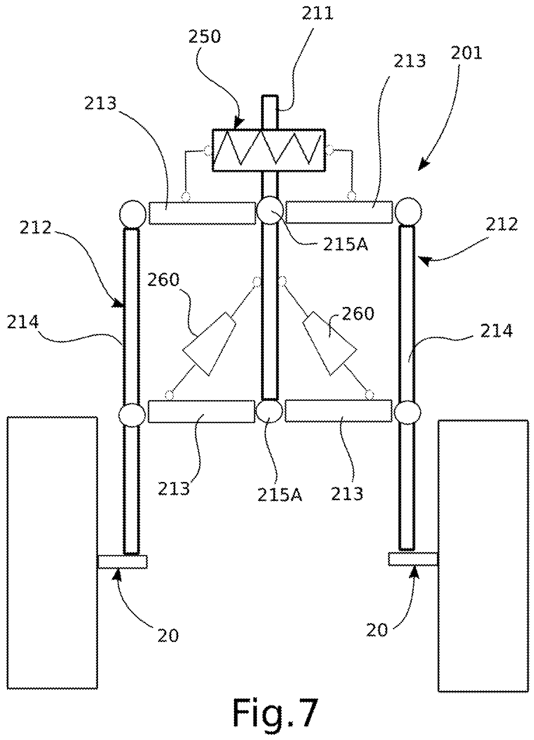

Fig. 7 shows a diagram of a forecarriage of rolling motor vehicle with two steering front wheels, according to the invention, varying with respect to the motor vehicles of figure 1, 4 and 6;
Fig. 8 shows a diagram of a rear axle of a straddle-type rolling vehicle according to the invention, in which an inerter device is interposed between the rear portion of the frame (rear axle frame) of the vehicle and an articulated quadrilateral carrying the rear wheels of the vehicle.

### Detailed description of embodiments

With reference to figures mentioned above, a motor vehicle, or a straddle-type vehicle, according to the invention, of the rolling type with two steering front wheels and a single rear drive wheel, for example a scooter, is generally indicated with reference numeral 1 (in other embodiments according to the invention, not shown here, the motor vehicle may comprise two motor-driven rear wheels). The main frame of the motor vehicle is indicated with 2 and the rear wheel, motor-driven, with 3.

In summary, in the straddle-type vehicle 1 there is provided for a kinematic mechanism 10 with a forecarriage frame 11, to which there is constrained an articulated quadrilateral 12 formed by two crosspieces (or connecting rods) 13 and two uprights (or rocker arms) 14. The crosspieces 13 are horizontal when the vehicle is in neutral condition, that is not inclined (zero roll angle) and it advances along a straight trajectory (zero steering angle).

The crosspieces 13 are joined to each other by the two uprights 14 which, together with the crosspieces, complete the articulated quadrilateral (crosspieces and uprights are articulated by means of respective hinges 15 at the ends). The crosspieces are in turn hinged to the forecarriage frame by means of respective median hinges 15A so as to be able to oscillate about parallel axes and substantially lying on a centreline plane of the forecarriage frame.

Two support members 20, one for each front wheel 30 (right and left) are associated with the uprights. The support members 20 rotate about steering axes and they may rotate or roto-translate with respect to springing axes, to allow a sinking movement.

In order to steer the vehicle, provided for is a steering device 40 comprising a handlebar 41 which is connected to the articulated quadrilateral 12 by means of a steering column 42, rotatably housed in a steering tube 43. The steering tube 43 is fixed to the forecarriage frame 11. The steering kinematic mechanism further comprises a connecting bar 44 which connects the two support members 20 of the two wheels 30. With the vehicle in neutral configuration, the connecting bar 44 is substantially horizontal. In a known manner, the steering movement controlled by the handlebar 41 is transmitted from the steering column 42 to the connecting bar 44.

The wheels 30 must be able to carry out a sussultatory motion, that is an oscillation or roto-translation motion in a plane substantially orthogonal to the axis of the wheels. This is allowed by the support members 20 which may rotate or roto-translate with respect to the springing axes and by a suspension system which dampens this motion. The suspension system comprises, for each support member, a suspension 50 which comprises an elastic component and a viscous component (shock absorber). In this example there is a suspension 50 for each wheel 30.

Advantageously, the forecarriage comprises an inerter device 60 interposed between the forecarriage frame 11 and the articulated quadrilateral 12, with two parts thereof movable with respect to each other, respectively connected to the frame and to the quadrilateral.

As mentioned, an inerter device is a device interposed between two parts in relative movement with respect to each other and it has the function of creating resistance to the motion as a function of the relative acceleration between the two parts in motion. A low relative acceleration leads to a lower resistance to motion with respect to a high relative acceleration.

The interposition of an inerter device 60 between the forecarriage frame 11 and the articulated quadrilateral 12 allows to stiffen the assembly formed by the articulated quadrilateral and by the forecarriage frame. For example, reference shall be made to overcoming an obstacle by one of the two wheels of the forecarriage which does not generate an impulsive reaction on the wheel, for example overcoming a small smooth bump. The wheel transmits the motion (suitably damped by the shock absorber) upwards to the upright of the articulated quadrilateral with which there is associated the relative support assembly 20, which therefore tends to move in a "smooth", or non-impulsive, manner upwards, rotating the entire articulated quadrilateral about the hinges for pivoting to the forecarriage frame 11, "smoothly" changing also the configuration of the second wheel associated with the other upright of the articulated quadrilateral. The movement of the upright of the quadrilateral with which the wheel is associated occurs with low acceleration, therefore the inerter device 60 opposes low resistance to the relative movement between the forecarriage frame and the articulated quadrilateral allowing a wide relative movement.

Reference shall be made to a sudden impulsive impact to a wheel due to a porthole. The wheel transmits the impulsive force upwards to the upright of the articulated quadrilateral with which there is associated the relative support assembly 20, which therefore tends to move upwards rotating the entire articulated quadrilateral about the hinges for pivoting to the forecarriage frame 11, therefore changing the configuration of the second wheel associated with the other upright of the articulated quadrilateral, which will tend to react, tending to create a "vibration" effect as a result. However, the impulsive force is such to move the upright of the quadrilateral associated with which is the wheel with a high acceleration, therefore the inerter device 60 opposes a high resistance to the relative movement between the forecarriage frame and the articulated quadrilateral, basically making the coupling thereof rigid and therefore limiting the "vibration" effect.

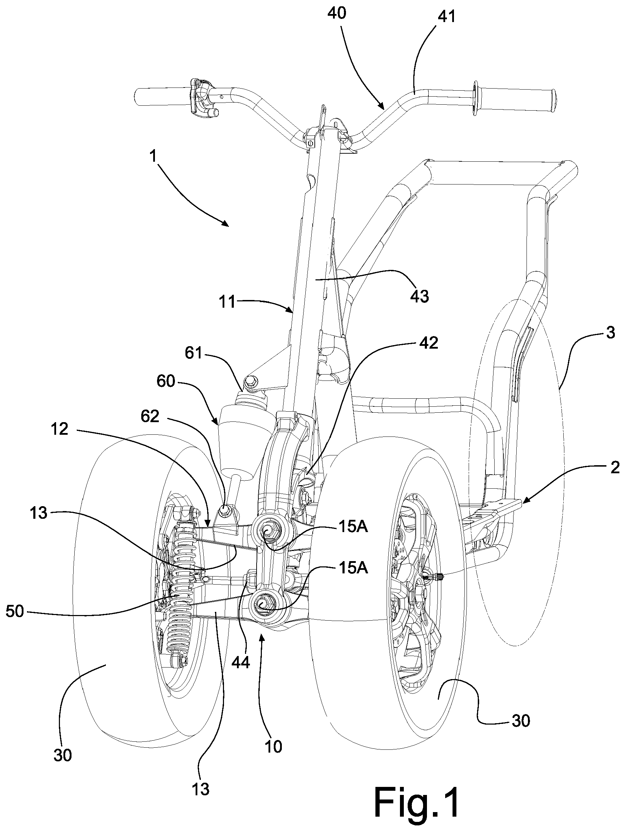

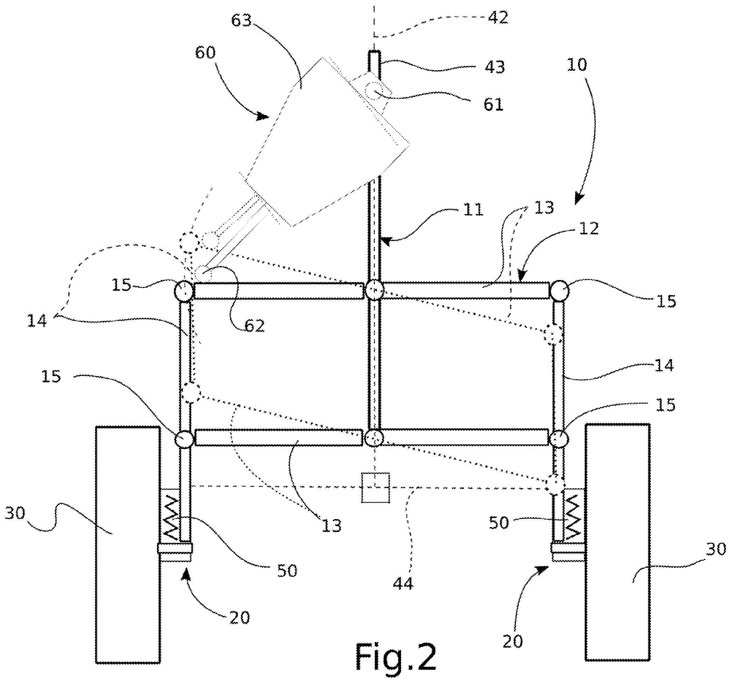

For example, a first embodiment provides for that the inerter device 60 be of the linear type (like in figures 1, 2 and 3), or the inerter device 60 provides for a first operative connection portion 61 hinged to the forecarriage frame 11 and to a second operative connection portion 62 hinged to the articulated quadrilateral, for example to the upper crosspiece 13 (as schematised in figure 1 and 2), or hinged to an upright 14.

The two connection portions 61 and 62 may move with respect to each other along a rectilinear direction. For example, the second operative terminal 62 forms a translating element one of whose ends is hinged to the crosspiece 13 and the opposite end is slidable in a guide defined in a box-like body 63 defining the first connection portion 61, hinged to the forecarriage frame 11.

According to the known technique, the inerter device 60 may be of mechanical, fluid-based, hydraulic, magnetic type, depending on the needs.

For example, an inerter device 60 used in the present invention may for example be like one of those described in US2009/0139225 as well as in US7316303, which are considered integrally incorporated hereto for reference.

Basically, in the case of the inerter 60 of the mechanical or magnetic or hydraulic type, the movement of the translating element forming the second connection portion 62, through a kinematic or hydraulic transmission assembly, is transformed into a rotary motion (with the desired transmission ratio) of an inertial mass (a flywheel 64) connected to the first connection portion 61.

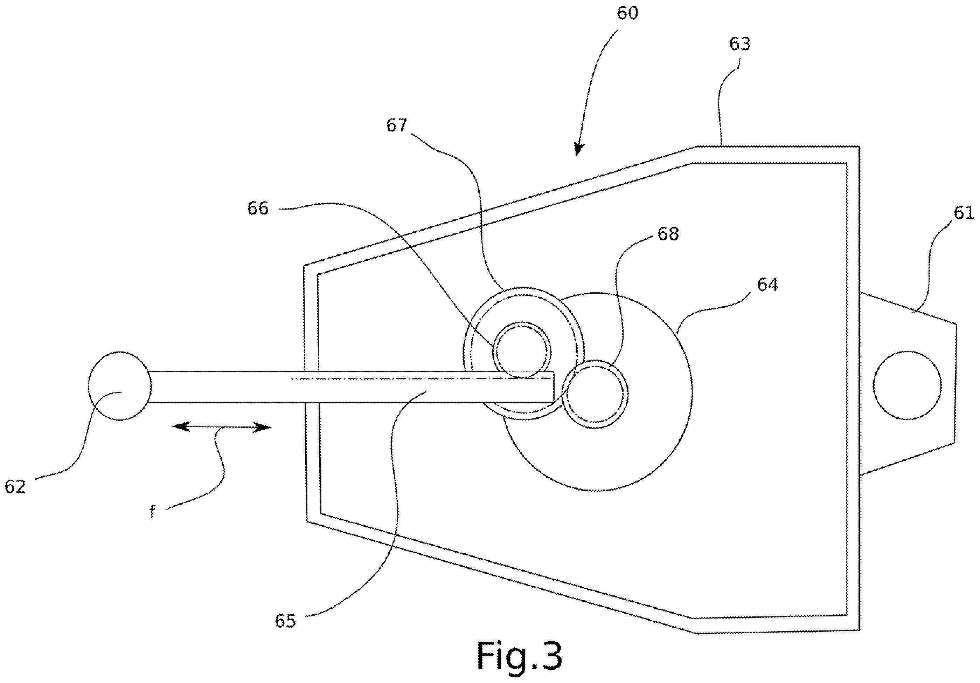

By way of example, figure 3 shows an inerter device 60, of the known type, that is particularly simple, entirely mechanical and of the linear type. The translating element of the second operative connection portion 62 provides for a rack and pinion 65 (or a worm screw), which meshes with a first gearwheel 66 (in the case of the worm screw, an appropriate rotary gear member) of a kinematic transmission assembly for connection to the flywheel 64. In particular, the first gear 66 is pivoted to the box-like body 63 and it is integrally joined and coaxial to a second gearwheel 67, in turn meshed with a third gearwheel 68 coaxial to and integrally joined with the flywheel 64 as well as pivoted to the box-like body 63. The rectilinear motion of the rack and pinion 65 (or of the second connection portion 62 of the inerter) toward the first connection portion 61 (the box-like body) drives the flywheel 64 in rotation with the desired transmission ratio.

An inerter device 60 of the linear type used herein, may also be of the fully fluid-based type, or wherein the inertia is given by the particular motion of a fluid along a path, such as for example the one shown in US2013/0032442, which is considered integrally incorporated hereto for reference.

Besides the linear mechanical inerters, there may be provided for mechanical inerters of the rotary type, in which the connection portions - one connected to the frame and one connected to the articulated quadrilateral - have a relative movement of the rotary type and not of the translation type.

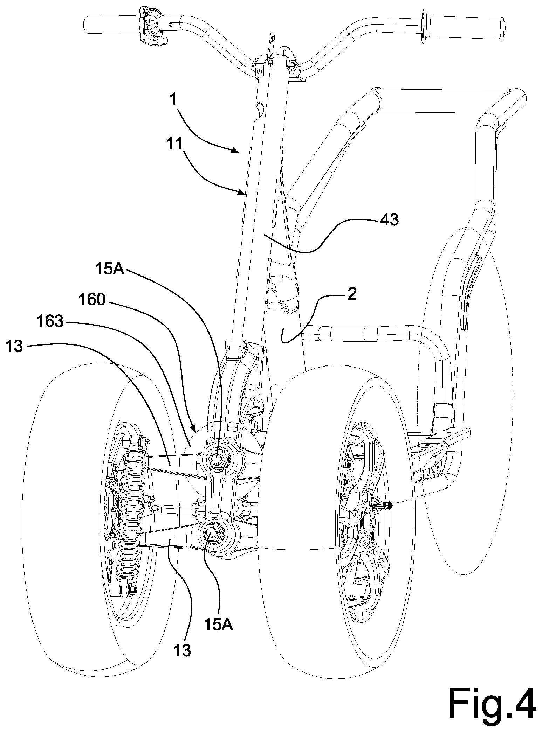

Figure 4 for example shows a variant of the example of figure 1, in particular in relation to the inerter device, now indicated reference numeral 160, housed in a box-like body 163.

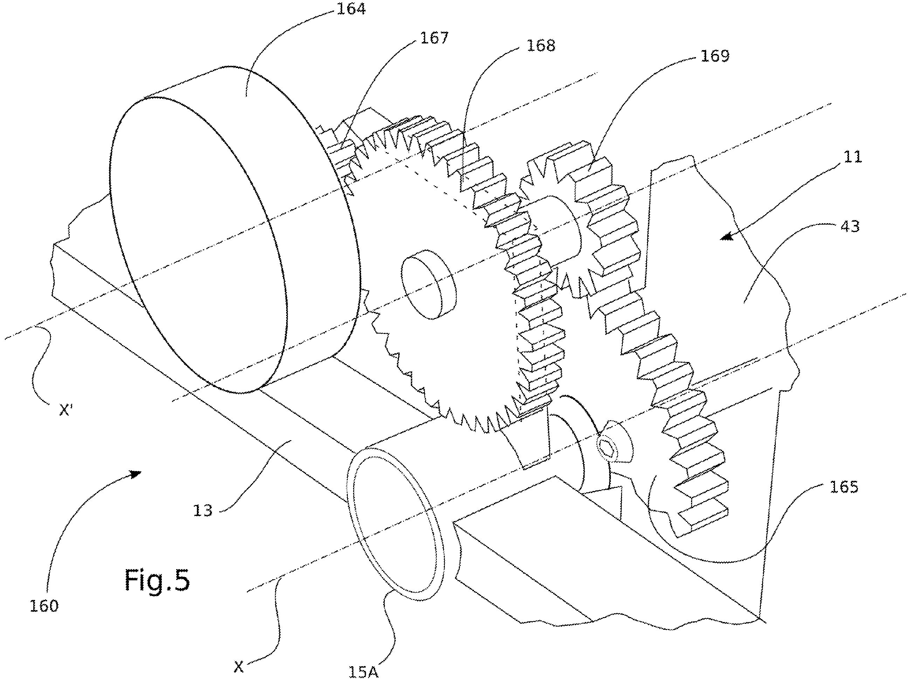

In this example, the inerter device is of the rotary type and it provides for (see the diagram of figure 5, in which the box-like body 163 is not shown) a flywheel 164 pivoted to a crosspiece 13 (for example the upper one), or to a body fixed to the crosspiece, of the articulated quadrilateral 12, with rotation axis X 'parallel to the axis X for pivoting the quadrilateral 12 to the frame 11. A wheel or ring gear 165 is integrally joined with the forecarriage frame 11. A kinematic transmission assembly of the gear type connects the flywheel to the crosspiece, to the gearwheel 165 integrally joined with the frame 11, in order to allow the rotation of the flywheel. Furthermore, the object of the gear transmission is to multiply the angular motion of the flywheel with respect to the angular motion of the crosspiece with the desired transmission ratio, in order to allow the inertial resistance effect provided for in the inerter device.

The kinematic transmission assembly for example comprises a first gearwheel 167 coaxial to and integrally joined with the flywheel 164, a second gearwheel 168 also pivoted to a crosspiece portion 12, and a third gearwheel 169, coaxial to and integrally joined with the second gearwheel 168, meshed to the gearwheel 165 integrally joined with the forecarriage frame 11. As mentioned, furthermore, the transmission ratio of the gear transmission is to multiply the angular motion of the flywheel with respect to the angular motion of the crosspiece.

Basically, any part of the, or fixed to the, crosspiece and any part of the, or fixed to the forecarriage frame may be considered as the connection portions 161 and 162 of the inerter device 160, such as for example the seat for pivoting the flywheel to the crosspiece and the wheel (or ring gear) fixed to the forecarriage frame.

Still, in another configuration (not shown in the figures), the inerter device now described can be "inverted", or pivoting the flywheel to the forecarriage frame, and arranging a gearwheel integrally joined to the crosspiece (for example coaxial to the axis for pivoting the crosspiece to the forecarriage frame), as well as arranging a kinematic transmission assembly, or a cascade of gearwheels, between the flywheel and the gearwheel fixed to the crosspiece. The rotation of the crosspiece about the axis for pivoting to the forecarriage frame drives the gearwheel fixed thereto - which transmits a rotary motion to the flywheel through the transmission assembly - in rotation with the desired transmission ratio.

Obviously, for both examples now reported, the type and the position of the various rotary members and of the flywheel may be different from those indicated, based on the specific design needs. For example, the flywheel and/or the gearwheel (or ring gear) fixed to the forecarriage frame or fixed to the crosspiece may be arranged coaxially to the axis for pivoting the crosspiece to the forecarriage frame.

The inerter device may comprise an apparatus for adjusting the value of resistance to the relative movement of the connection portions thereof, schematised with reference numeral 70. For example, such apparatus for adjusting the value of resistance to the relative movement of the connection portions may provide for the adjustment of the inertial mass of the flywheel, such as for example by adding or removing mass to/from the flywheel for example as shown in US2009/0139225.

In other embodiments (not shown in the figures), the apparatus for adjusting the value of resistance to the relative movement of the connection portions thereof may comprise a magnetic system for braking the rotation of the flywheel, for example comprising a device for generating a magnetic field with adjustable intensity (for example by means of solenoid system in which the current/voltage in the windings is adjustable) in which the flywheel is submerged, on which there is generated a magnetic force which opposes the rotation thereof. Basically, a magnetic brake is added to the flywheel and the braking force is adjusted to change the inertia associated with the rotation of the flywheel.

Still in other embodiments (also not shown in the figures), adjusting the value of resistance to the relative movement of the connection portions may provide for a change in the transmission ratio in the kinematic chain between the flywheel and one of the connection portions.

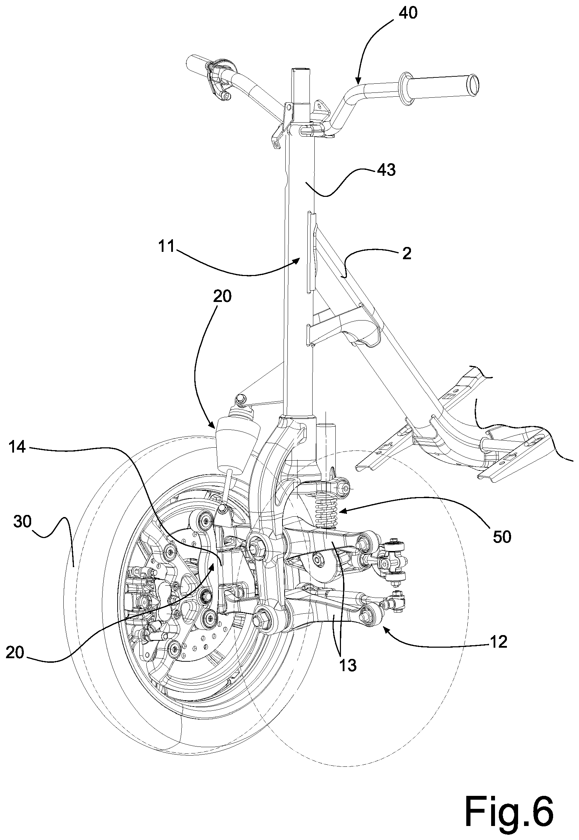

Figure 6 shows a motor vehicle according to the invention, provided with an inerter 60, for example of the linear type, and pivoted between the forecarriage frame 11 and upper crosspiece 13 of the articulated quadrilateral 12, wherein the motor vehicle is of the type with a suspension system provided with a single suspension 50 which serves both support assemblies 20 of the wheels 30, according to the structure shown in PCT/IB2019/058180 and PCT/IB2019/058180, which are considered integrally incorporated hereto for reference.

In other embodiments, the forecarriage, now indicated with 201, provides for two articulated quadrilaterals 212, having a shared upright formed by the forecarriage frame 211, and wherein each articulated quadrilateral 212 comprises a pair of crosspieces 213 hinged, for a respective end, to the forecarriage frame 211 so as to be able to oscillate about parallel axes, and an upright 214 articulated to the ends of the crosspieces 13 opposite to those for hinging to the frame 211; the axis 215A for hinging the crosspieces of the two quadrilaterals 212 is the same for the corresponding crosspieces of each quadrilateral.

A member 20 for supporting a respective wheel is associated with each upright 214. The two ends of a suspension system 250 are hinged to the upper crosspieces 213 of the two articulated quadrilaterals 212.

In this structural configuration of the forecarriage of the motor vehicle there are two inerter devices 260, each interposed between the frame 211 and a respective articulated quadrilateral 212. For example, there may be arranged two inerter devices of the linear type whose connection portions are respectively hinged to the forecarriage frame 211 and to a respective crosspiece 213 (or there can be arranged two rotary inerter devices for example like those described above, interposed between a respective crosspiece and the forecarriage frame).

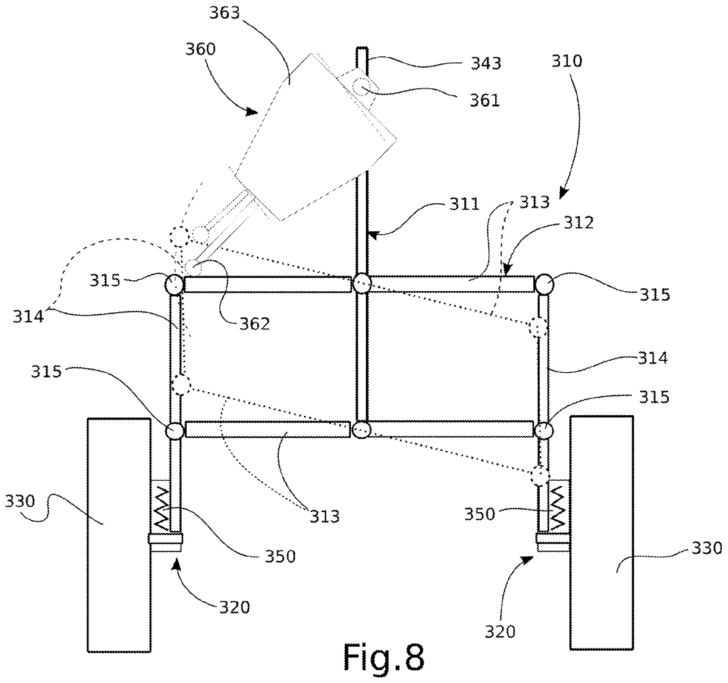

Figure 8 shows the case of a straddle-type vehicle with a kinematic mechanism according to the invention in which an articulated quadrilateral is constrained to the portion of the frame of the vehicle forming the rear axle frame of the vehicle.

The structure of the kinematic mechanism is schematised in a manner substantially similar to that of figure 2, with difference lying in the fact that the frame to which it is constrained is the rear axle frame integrally joined with the frame 2 of the vehicle, or relative to the rear portion of the frame 2. In this case the two wheels of the rear axle are preferably drive wheels. For the sake of simplicity, the elements indicated in figure 2 will be repeated herein with the number increased by 300.

Therefore, there is present a kinematic mechanism 310 with a rear axle frame 311, to which there is constrained an articulated quadrilateral 312 formed by two crosspieces (or connecting rods) 313 and two uprights (or rocker arms) 314. The crosspieces 313 are horizontal when the vehicle is in neutral condition, that is not inclined (zero roll angle) and it advances along a straight trajectory (zero steering angle).

The crosspieces 313 are joined to each other by the two uprights 314 which, together with the crosspieces, complete the articulated quadrilateral (crosspieces and uprights are articulated by means of respective hinges 15 at the ends). The crosspieces are in turn hinged to the forecarriage frame by means of respective median hinges 315A so as to be able to oscillate about parallel axes and substantially lying on a centreline plane of the forecarriage frame.

Two support members 320, one for each rear wheel 330 (right and left) are associated with the uprights. The support members 320 rotate about steering axes and they may rotate or roto-translate with respect to springing axes, to allow a sinking movement. There is present a suspension system comprising, for each support member, a suspension 350 which comprises an elastic component and a viscous component (shock absorber). In this example there is a suspension 350 for each wheel 330. The kinematic mechanism 310 operates in a manner substantially similar to the case of the forecarriage of figure 2.

## Claims

1. Rolling kinematic mechanism of a straddle-type vehicle (1) having at least three wheels (30, 330) comprising:
- at least one articulated quadrilateral (12, 212, 312), configured to be connected to a frame (2, 11, 211, 311) of said straddle-type vehicle, wherein the articulated quadrilateral supports - by means of a first support member and a second support member (20, 320) - respectively a first wheel and a second wheel (30, 330),
- at least one inerter device (60, 260, 360) arranged between the frame (2, 11, 211, 311) of the straddle-type vehicle and said articulated quadrilateral (12, 312), so that said at least one inerter device provides resistance to the relative movement of said at least articulated quadrilateral which is a function of the relative acceleration between said articulated quadrilateral (12, 212, 312) and said frame (2, 11, 311),
wherein said at least one inerter device (60, 260, 360) is of the linear type and it provides for a connection portion (61) constrained to the frame (2, 11, 211, 311) of the straddle-type vehicle and a connection portion (62) constrained to said articulated quadrilateral (12, 212, 312), wherein said connection portions (61, 62) are configured to move with respect to each other, and
**characterized in that** said inerter device (60, 260, 360) comprises a box-like body (63) provided for on which is a said connection portion (61, 62), and wherein articulated in said body (63) is a flywheel (64), kinematically connected - by means of a kinematic transmission assembly (66, 67, 68) to a translating element (65) provided for on which is the other connection portion (62), so that a motion of said articulated quadrilateral (12, 212, 312) with respect to said straddle-type vehicle corresponds to a relative translation of said translating element (65) in said box-like body (63) with ensuing rotation of said flywheel (64), with a transmission ratio configured to multiply the angular motion of the flywheel (64).

2. Rolling kinematic mechanism of a straddle-type vehicle (1) according to claim 1, wherein said articulated quadrilateral (12, 212) is a forecarriage articulated quadrilateral configured to be connected to a portion of the frame (2) of the straddle-type vehicle forming the forecarriage frame (11, 211) of said vehicle, wherein said inerter device (60, 260) is configured to be arranged between said forecarriage frame (11, 211) of the straddle-type vehicle and said forecarriage articulated quadrilateral (12, 212).

3. Rolling kinematic mechanism of a straddle-type vehicle (1) according to claim 2, wherein provided for is a steering device (40), constrained to the forecarriage frame (11, 211) and operatively connected to the first support member and to the second support member (20) to allow the steering of said wheels (30).

4. Rolling kinematic mechanism of a straddle-type vehicle (1) according to claim 1, wherein said articulated quadrilateral is a rear axle articulated quadrilateral (312) configured to be connected to a portion of the frame of the straddle-type vehicle forming the rear axle frame (311), wherein said inerter device (360) is configured to be arranged between said rear axle frame (311) and said rear axle articulated quadrilateral (312).

5. Rolling kinematic mechanism of a straddle-type vehicle (1) according to one of the preceding claims, wherein provided for is a suspension system (50, 250, 350) which allows a sussultatory motion of the first wheel (30, 330) and of the second wheel (30, 330) with respect to at least one part of the at least one articulated quadrilateral (12, 212, 312).

6. Rolling kinematic mechanism of a straddle-type vehicle (1) according to one or more of the preceding claims, wherein said inerter device (60, 260, 360) comprises two connection portions (61, 62), wherein a first connection portion (61) is constrained to the frame (11, 211, 311) of the straddle-type vehicle and a second connection portion (62) is constrained to said articulated quadrilateral (12, 212, 312) , therefore, said at least one inerter device (60, 260, 360) provides resistance to the relative movement of said articulated quadrilateral which is a function of the relative acceleration of said two connection portions (61, 62).

7. Rolling kinematic mechanism of a straddle-type vehicle (1) according to one or more of the preceding claims, provided with a single articulated quadrilateral (12, 312) comprising a pair of crosspieces (13, 313), each hinged to the frame (11, 311) of the straddle-type vehicle, by means of respective median hinges (15A) so as to be able to oscillate about parallel axes, and a pair of uprights (14, 314), each hinged to a corresponding part of the two crosspieces (13, 313) by means of hinges (15, 315) defining rotation axes parallel to the axes about which the crosspieces rotate; said at least one inerter device (60, 360) being arranged with a first connection portion (361) constrained to said straddle-type vehicle, and a second connection portion (362) constrained to a said crosspiece or to a said upright.

8. Rolling kinematic mechanism of a straddle-type vehicle (1) according to one or more of the preceding claims, comprising a double articulated quadrilateral (212) having a shared upright formed by the frame (211) of the straddle-type vehicle, each articulated quadrilateral (212) comprising a pair of crosspieces (213) hinged, for a respective end, to said frame (211) so as to be able to oscillate about parallel axes, and an upright (214) articulated at the ends of said crosspieces (213) opposite to those for hinging to the frame (211), wherein the axis for hinging the crosspieces (213) to the frame of said two quadrilaterals are the same for corresponding crosspieces of each quadrilateral (212), wherein two inerter devices (260), each interposed between said frame (211) and a respective articulated quadrilateral (212), are present.

9. Rolling kinematic mechanism of a straddle-type vehicle (1) according to claim 1, wherein the constraints of said connection portions (61, 62, 361, 362) to the frame (11, 211, 311) of the straddle-type vehicle and to the said articulated quadrilateral (12. 212, 312) are hinges.

10. Rolling kinematic mechanism of a straddle-type vehicle (1) according to claim 1, wherein said kinematic transmission assembly (66, 67, 68) is of the gear type.

11. Rolling kinematic mechanism of a straddle-type vehicle (1) according to one of the preceding claims, wherein said at least one inerter device (160) is of the rotary type and it provides for a connection portion constrained to the frame (11) of the straddle-type vehicle and an opposite connection portion constrained to said articulated quadrilateral , wherein said connection portions have a relative rotary motion relative to each other.

12. Rolling kinematic mechanism of a straddle-type vehicle (1) according to claim 11, wherein
- a first connection portion is the pivoting seat of a flywheel (164) provided for on a crosspiece of said quadrilateral hinged to the frame (11) of the straddle-type vehicle, while the second connection portion is a gearwheel (165) fixed to said frame, preferably coaxial to the axis for hinging said crosspiece to said frame, wherein said flywheel (164) is kinematically connected - by means of a transmission assembly (167, 168, 169), preferably of the gear type - to said gearwheel, hence a rotation of said flywheel - with a transmission ratio configured to multiply the angular motion of the flywheel - corresponds to a rotation of said crosspiece about the axis thereof for hinging to said frame;
or
- a first operative connection portion is a gearwheel (165) fixed on a crosspiece of said quadrilateral hinged to the frame, said gearwheel (165) being preferably coaxial with the axis for hinging said crosspiece to said frame (11) of the straddle-type vehicle, and a second operative connection portion is the seat for pivoting a flywheel (164) to said frame, wherein said flywheel (164) is kinematically connected - by means of a transmission assembly (167, 168, 169), preferably of the of the gear type - to said gear-wheel, hence a rotation of said flywheel - with a transmission ratio configured to multiply the angular motion of said flywheel - corresponds to a rotation of said crosspiece about the axis thereof for hinging to said frame.

13. Rolling kinematic mechanism of a straddle-type vehicle (1) according to one of the preceding claims, wherein said at least one inerter device (60, 160, 260. 360) comprises an apparatus (70) for adjusting the value of resistance to the relative movement of the connection portions.

14. Straddle-type vehicle, of the rolling type, having at least three wheels (30, 330), comprising a rolling kinematic mechanism according to one or more of the preceding claims.

## Patentansprüche

1. Rollkinematikmechanismus eines Grätschsitzfahrzeugs (1) mit mindestens drei Rädern (30, 330), umfassend:
- mindestens ein Gelenkviereck (12, 212, 312), das so ausgebildet ist, dass es mit einem Rahmen (2, 11, 211, 311) des Grätschsitzfahrzeugs verbunden werden kann, wobei das Gelenkviereck mittels eines ersten Stützelements und eines zweiten Stützelements (20, 320) jeweils ein erstes Rad und ein zweites Rad (30, 330) stützt,
- mindestens eine Dämpfungsvorrichtung (60, 260, 360), die zwischen dem Rahmen (2, 11, 10, 211, 311) des Grätschsitzfahrzeugs und dem Gelenkviereck (12, 312) angeordnet ist, sodass die mindestens eine Dämpfungsvorrichtung einen Widerstand gegen die Relativbewegung des mindestens einen Gelenkvierecks bereitstellt, der einer Funktion der Relativbeschleunigung zwischen dem Gelenkviereck (12, 212, 312) und dem Rahmen (2, 11, 311) ist,
wobei die mindestens eine Dämpfungsvorrichtung (60, 260, 360) vom linearen Typ ist und einen Verbindungsabschnitt (61), der an den Rahmen (2, 11, 211, 311) des Grätschsitzfahrzeugs angebracht ist, und einen Verbindungsabschnitt (62) bereitstellt, der an das Gelenkviereck (12, 212, 312) angebracht ist (12, 212, 312) verbunden ist, wobei die Verbindungsabschnitte (61, 62) so ausgebildet sind, dass sie sich relativ zueinander bewegen, und
**dadurch gekennzeichnet, dass** die Dämpfungsvorrichtung (60, 260, 360) einen kastenartigen Körper (63) umfasst, an dem sich ein Verbindungsabschnitt (61, 62) befindet, und wobei in dem Körper (63) ein Schwungrad (64) gelenkig gelagert ist, das kinematisch - mittels einer kinematischen Übertragungsanordnung (66, 67, 68) - mit einem Translationselement (65) verbunden ist, an dem der andere Verbindungsabschnitt (62) bereitgestellt ist, sodass eine Bewegung des Gelenkvierecks (12, 25, 212, 312) in Bezug auf das Grätschsitzfahrzeug eine relative Verschiebung des Translationselements (65) in dem kastenförmigen Körper (63) mit anschließender Drehung des Schwungrads (64) entspricht, wobei das Übersetzungsverhältnis so ausgebildet ist, dass es die Winkelbewegung des Schwungrads (64) vervielfacht.

2. Rollkinematikmechanismus eines Grätschsitzfahrzeugs (1) gemäß Anspruch 1, wobei das Gelenkviereck (12, 212) ein Vorderwagen-Gelenkviereck ist, das so ausgebildet ist, dass es mit einem Teil des Rahmens (2) des Grätschsitzfahrzeugs verbunden ist, der den Vorderwagenrahmen (11, 211) des Fahrzeugs bildet, wobei die Dämpfungsvorrichtung (60, 260) so ausgebildet ist, dass sie zwischen dem Vorderwagenrahmen (11, 211) des Grätschsitzfahrzeugs und dem Gelenkviereck (12, 212) des Vorderwagens angeordnet ist.

3. Rollkinematikmechanismus eines Grätschsitzfahrzeugs (1) gemäß Anspruch 2, wobei eine Lenkvorrichtung (40) bereitgestellt ist, die am Vorderwagenrahmen (11, 211) angebracht und wirkverbunden mit dem ersten Stützelement und dem zweiten Stützelement (20) ist, um die Lenkung der Räder (30) zu ermöglichen.

4. Rollkinematikmechanismus eines Grätschsitzfahrzeugs (1) gemäß Anspruch 1, wobei das Gelenkviereck ein Hinterachsgelenkviereck (312) ist, das so ausgebildet ist, dass es mit einem Teil des Rahmens des Grätschsitzfahrzeugs verbunden ist, der den Hinterachsrahmen (311) bildet, wobei die Dämpfungsvorrichtung (360) so ausgebildet ist, dass sie zwischen dem Hinterachsrahmen (311) und dem hinteren Gelenkviereck (312) angeordnet ist.

5. Rollkinematikmechanismus eines Grätschsitzfahrzeugs (1) gemäß einem der vorangegangenen Ansprüche, wobei ein Aufhängungssystem (50, 250, 350) bereitgestellt wird, das eine ruckartige Bewegung des ersten Rads (30, 330) und des zweiten Rads (30, 330) in Bezug auf mindestens einen Teil des mindestens einen Gelenkvierecks (12, 212, 312) ermöglicht.

6. Rollkinematikmechanismus eines Grätschsitzfahrzeugs (1) gemäß einem oder mehreren der vorangegangenen Ansprüche, wobei die Dämpfungsvorrichtung (60, 260, 360) zwei Verbindungsabschnitte (61, 62) umfasst, wobei ein erster Verbindungsabschnitt (61) an dem Rahmen (11, 211, 311) des Grätschsitzfahrzeugs und ein zweiter Verbindungsabschnitt (62) an dem Gelenkviereck (12, 212, 312) angebracht ist, wobei die mindestens eine Dämpfungsvorrichtung (60, 260, 360) einen Widerstand gegen die Relativbewegung des Gelenkvierecks bereitstellt, der der Relativbeschleunigung der beiden Verbindungsabschnitte (61, 62) dient.

7. Rollkinematikmechanismus eines Grätschsitzfahrzeugs (1) gemäß einem oder mehreren der vorangegangenen Ansprüche, bereitgestellt mit einem einzigen Gelenkviereck (12, 312), das ein Paar Querstreben (13, 313) umfasst, die jeweils mittels entsprechender Mittelgelenke (15A) schwenkbar ist, sodass es um parallele Achsen schwingen kann, und ein Paar Stützen (14, 314) umfasst, die jeweils mittels Gelenken (15, 315), die Drehachsen parallel zu den Achsen definieren, um die sich die Querstreben drehen, an einem entsprechenden Teil der beiden Querstreben (13, 313) angelenkt sind; wobei die mindestens eine Dämpfungsvorrichtung (60, 360) mit einem ersten Verbindungsabschnitt (361), der an dem Grätschsitzfahrzeug angebracht ist, und einem zweiten Verbindungsabschnitt (362), der an einem der Querstreben oder an einem der Stützen angebracht ist, angeordnet ist.

8. Rollkinematikmechanismus eines Grätschsitzfahrzeugs (1) gemäß einem oder mehreren der vorangegangenen Ansprüche, umfassend ein doppelt gelenkiges Gelenkviereck (212) mit einer gemeinsamen Stütze, die durch den Rahmen (211) des Grätschsitzfahrzeugs gebildet wird, wobei jedes Gelenkviereck (212) ein Paar Querstreben (213) umfasst, die an einem jeweiligen Ende an dem Rahmen (211) angelenkt sind, sodass sie um parallele Achsen schwingen können, und eine Stütze (214) umfasst, die an den Enden der Querstreben (213) gegenüber denen zum Anlenken an den Rahmen (211) angelenkt ist, wobei die Achse zum Anlenken der Querstreben (213) an den Rahmen der beiden Vierecke für die entsprechenden Querstreben jedes Vierecks (212) gleich ist, wobei zwei Dämpfungsvorrichtungen (260) vorhanden sind, die jeweils zwischen dem Rahmen (211) und einem entsprechenden Gelenkviereck (212) angeordnet sind.

9. Rollkinematikmechanismus eines Grätschsitzfahrzeugs (1) gemäß Anspruch 1, wobei die Verbindungsabschnitte (61, 62, 361, 362) mit dem Rahmen (11, 211, 311) des Grätschsitzfahrzeugs und mit dem Gelenkviereck (12, 212, 312) durch Scharniere verbunden sind.

10. Rollkinematikmechanismus eines Grätschsitzfahrzeugs (1) gemäß Anspruch 1, wobei die kinematische Übertragungsanordnung (66, 67, 68) vom Getriebetyp ist.

11. Rollkinematikmechanismus eines Grätschsitzfahrzeugs (1) gemäß einem der vorangegangenen Ansprüche, wobei die mindestens eine Dämpfungsvorrichtung (160) vom Drehtyp ist und einen mit dem Rahmen (11) des Grätschsitzfahrzeugs angebrachten Verbindungsabschnitt und einen mit dem Gelenkviereck verbundenen gegenüberliegenden Verbindungsabschnitt bereitstellt, wobei die Verbindungsabschnitte eine relative Drehbewegung zueinander aufweisen.

12. Rollkinematikmechanismus eines Grätschsitzfahrzeugs (1) gemäß Anspruch 11, wobei
- ein erster Verbindungsabschnitt der schwenkbare Sitz eines Schwungrads (164) ist, das an einem Querstück des Vierecks bereitgestellt ist, das an dem Rahmen (11) des Grätschsitzfahrzeugs angelenkt ist, während der zweite Verbindungsabschnitt ein Zahnrad (165) ist, das an dem Rahmen befestigt ist, vorzugsweise koaxial zu der Achse zum Anlenken des Querstücks an dem Rahmen, wobei das Schwungrad (164) kinematisch - mittels einer vorzugsweise getriebeartigen Übertragungsanordnung (167, 168, 169) - mit dem Zahnrad verbunden ist, sodass eine Drehung des Schwungrads - mit einem Übersetzungsverhältnis, das so ausgebildet ist, dass es die Winkelbewegung des Schwungrads vervielfacht - einer Drehung des Querstücks um dessen Achse zum Anlenken an den Rahmen entspricht;
oder
- ein erster operativer Verbindungsteil ein Zahnrad (165) ist, das an einem Querstück des an den Rahmen angelenkten Vierecks befestigt ist, wobei das Zahnrad (165) vorzugsweise koaxial zur Achse für die Anlenkung des Querstücks an den Rahmen (11) des Grätschsitzfahrzeugs ist, und ein zweiter operativer Verbindungsteil der Sitz zum Drehen eines Schwungrads (164) an dem Rahmen ist, wobei das Schwungrad (164) kinematisch - mittels einer Getriebeanordnung (167, 168, 169), vorzugsweise vom Zahnradtyp, mit dem Zahnrad verbunden ist, sodass eine Drehung des Schwungrads - mit einem Übersetzungsverhältnis, das so ausgebildet ist, dass es die Winkelbewegung des Schwungrads vervielfacht - einer Drehung des Querstücks um dessen Achse zum Anlenken an den Rahmen entspricht.

13. Rollkinematikmechanismus eines Grätschsitzfahrzeugs (1) gemäß einem der vorangegangenen Ansprüche, wobei die mindestens eine Dämpfungsvorrichtung (60, 160, 260, 360) eine Vorrichtung (70) zum Einstellen des Widerstandswerts gegen die Relativbewegung der Verbindungsabschnitte umfasst.

14. Rollendes Grätschsitzfahrzeug mit mindestens drei Rädern (30, 330), das einen Rollkinematikmechanismus gemäß einem oder mehreren der vorangegangenen Ansprüche umfasst.

## Revendications

1. Mécanisme cinématique de roulement d'un véhicule du type à selle (1) ayant au moins trois roues (30, 330) comprenant :
- au moins un quadrilatère articulé (12, 212, 312), configuré pour être connecté à un cadre (2, 11, 211, 311) dudit véhicule du type à selle, le quadrilatère articulé supportant - au moyen d'un premier organe de support et d'un deuxième organe de support (20, 320) - respectivement une première roue et une deuxième roue (30, 330),
- au moins un dispositif d'inertie (60, 260, 360) agencé entre le cadre (2, 11, 211, 311) du véhicule du type à selle et ledit quadrilatère articulé (12, 312), de sorte que ledit ou lesdits dispositif(s) d'inertie fournisse(nt) au mouvement relatif dudit ou desdits quadrilatère(s), une résistance qui est fonction de l'accélération relative entre ledit quadrilatéral articulé (12, 212, 312) et ledit cadre (2, 11, 311),
dans lequel ledit ou lesdits dispositif(s) d'inertie (60, 260, 360) est(sont) du type linéaire et il(s) fourni(ssen)t une partie de connexion (61) contrainte au cadre (2, 11, 211, 311) du véhicule du type à selle et une partie de connexion (62) contrainte audit quadrilatère articulé (12, 212, 312), lesdites parties de connexion (61, 62) étant configurées pour se déplacer l'une par rapport à l'autre,
ce mécanisme étant **caractérisé en ce que** ledit dispositif d'inertie (60, 260, 360) comprend un corps en forme de boîte (63) sur lequel se trouve l'une desdites parties de connexion (61, 62) et un volant d'inertie (64) étant articulé dans ledit corps (63), connectée cinématiquement - au moyen d'un ensemble de transmission cinématique (66, 67, 68) à un élément de translation (65) sur lequel se trouve l'autre partie de connexion (62), de sorte qu'un mouvement dudit quadrilatère articulé (12, 212, 312) par rapport audit véhicule du type à selle correspond à une translation relative dudit élément de translation (65) dans ledit corps en forme de boîte (63) avec une rotation consécutive dudit volant d'inertie (64), avec un rapport de transmission configuré pour multiplier le mouvement angulaire du volant d'inertie (64).

2. Mécanisme cinématique de roulement d'un véhicule du type à selle (1) selon la revendication 1, dans lequel ledit quadrilatère articulé (12, 212) est un quadrilatère articulé de train avant configuré pour être connecté à une partie du cadre (2) du véhicule du type à selle formant le cadre du train avant (11, 211) dudit véhicule, ledit dispositif d'inertie (60, 260) étant configuré pour être agencé entre ledit cadre du train avant (11, 211) du véhicule du type à selle et ledit quadrilatère articulé de train avant (12, 212).

3. Mécanisme cinématique de roulement d'un véhicule du type à selle (1) selon la revendication 2, dans lequel il est prévu un dispositif de direction (40), contraint audit cadre de train avant (11, 211) et connecté fonctionnellement au premier organe de support et audit deuxième organe de support (20) pour permettre de diriger lesdites roues (30).

4. Mécanisme cinématique de roulement d'un véhicule du type à selle (1) selon la revendication 1, dans lequel ledit quadrilatère articulé est un quadrilatère articulé à axe arrière (312) configuré pour être connecté à une partie du cadre du véhicule du type à selle formant le cadre à axe arrière (311), ledit dispositif d'inertie (360) étant configuré pour être agencé entre ledit cadre à axe arrière (311) et ledit quadrilatère articulé à axe arrière (312).

5. Mécanisme cinématique de roulement d'un véhicule du type à selle (1) selon l'une des revendications précédentes, dans lequel il est prévu un système de suspension (50, 250, 350) qui permet un mouvement saccadé de la première roue (30, 330) et de la deuxième roue (30, 330) par rapport à au moins une partie du ou des quadrilatères articulés (12, 212, 312).

6. Mécanisme cinématique de roulement d'un véhicule du type à selle (1) selon l'une ou plusieurs des revendications précédentes, dans lequel ledit dispositif d'inertie (60, 260, 360) comprend deux parties de connexion (61, 62), une première partie de connexion (61) étant contrainte au cadre (11, 211, 311) du véhicule du type à selle et une deuxième partie de connexion (62) étant contrainte audit quadrilatère articulé (12, 212, 312), par conséquent, ledit ou lesdits dispositif(s) d'inertie (60, 260, 360) fourni(ssen)t au mouvement relatif dudit quadrilatère articulé, une résistance qui est fonction de l'accélération relative desdites deux parties de connexion (61, 62).

7. Mécanisme cinématique de roulement du type à selle (1) selon l'une ou plusieurs des revendications précédentes, prévu avec un unique quadrilatère articulé (12, 312) comprenant une paire de pièces transversales (13, 313), chacune étant articulée au cadre (11, 311) du véhicule du type à selle, au moyen d'articulations médianes respectives (15A) de façon à être capable d'osciller autour d'axes parallèles, et une paire de montants (14, 314), articulés chacun à une partie correspondante des deux pièces transversales (13, 313) au moyen d'articulations (15, 315) définissant des axes de rotation parallèles aux axes autour desquels les pièces transversales tournent ; ledit ou lesdits dispositifs d'inertie (60, 360) étant agencé(s) avec une première partie de connexion (361) contrainte audit véhicule du type à selle, et une deuxième partie de connexion (362) contrainte à une dite pièce transversale ou à un dit montant.

8. Mécanisme cinématique de roulement d'un véhicule du type à selle (1) selon l'une ou plusieurs des revendications précédentes, comprenant un double quadrilatère articulé (212) ayant un montant partagé formé par le cadre (211) du véhicule du type à selle, chaque quadrilatère articulé (212) comprenant une paire de pièces transversales (213) articulées, pour une extrémité respective, audit cadre (211) de façon à être capable d'osciller autour d'axes parallèles, et un montant (214) articulé aux extrémités desdites pièces transversales (213) à l'opposé de celles pour l'articulation au cadre (211), les axes pour l'articulation des pièces transversales (213) au cadre desdits deux quadrilatères étant les mêmes pour des pièces transversales correspondantes de chaque quadrilatère (212), deux dispositifs d'inertie (260), chacun interposé entre ledit cadre (211) et un quadrilatère articulé respectif (212) étant présents.

9. Mécanisme cinématique de roulement d'un véhicule du type à selle (1) selon la revendication 1, dans lequel les contraintes desdites parties de connexion (61, 62, 361, 362) au cadre (11, 211, 311) du véhicule du type à selle et audit quadrilatère articulé (12, 212, 312) sont des articulations.

10. Mécanisme cinématique de roulement d'un véhicule du type à selle (1) selon la revendication 1, dans lequel ledit assemblage de transmission cinématique (66, 67, 68) est du type à engrenages.

11. Mécanisme cinématique de roulement d'un véhicule du type à selle (1) selon l'une des revendications précédentes, dans lequel ledit ou lesdits dispositif(s) d'inertie (160) est(sont) du type tournant et il est prévu une partie de connexion contrainte au cadre (11) du véhicule du type à selle et une partie de connexion opposée contrainte audit quadrilatère articulé, lesdites parties de connexion ayant un mouvement de rotation relative l'une par rapport à l'autre.

12. Mécanisme cinématique de roulement du type à selle (1) selon la revendication 11, dans lequel
- une première partie de connexion est le siège pivotant d'un volant d'inertie (164) prévu sur une pièce transversale dudit quadrilatère articulé au cadre (11) du véhicule du type à selle, tandis que la deuxième partie de connexion est une roue dentée (165) fixée audit cadre, de préférence coaxiale à l'axe d'articulation de ladite pièce transversale audit cadre, ledit volant d'inertie (164) étant cinématiquement connecté - au moyen d'un ensemble de transmission (167, 168, 169), de préférence du type à engrenages - à ladite roue dentée, ainsi, une rotation dudit volant d'inertie - avec un rapport de transmission configuré pour multiplier le mouvement angulaire du volant d'inertie - correspond à une rotation de ladite pièce transversale autour de son axe pour une articulation audit cadre ;
ou
- une première partie de connexion fonctionnelle est une roue dentée (165) fixée sur une pièce transversale dudit quadrilatère articulé au cadre, ladite roue dentée (165) étant de préférence coaxiale avec l'axe d'articulation de ladite pièce transversale audit cadre (11) du véhicule du type à selle, et une deuxième partie de connexion fonctionnelle étant le siège pour le pivotement d'un volant d'inertie (164) par rapport audit cadre, ledit volant d'inertie (164) étant cinématiquement connecté - au moyen d'un ensemble de transmission (167, 168, 169), de préférence du type à engrenages
- à ladite roue dentée, ainsi, une rotation dudit volant d'inertie - avec un rapport de transmission configuré pour multiplier le mouvement angulaire dudit volant d'inertie
- correspond à une rotation de ladite pièce transversale autour de son axe pour une articulation audit cadre.

13. Mécanisme cinématique de roulement d'un véhicule du type à selle (1) selon l'une des revendications précédentes, dans lequel ledit ou lesdits dispositif(s) d'inertie (60, 160, 260, 360) comprend un appareil (70) pour ajuster la valeur de la résistance au mouvement relatif des parties de connexion.

14. Véhicule du type à selle, du type roulant, ayant au moins trois roues (30, 330), comprenant un mécanisme cinématique de roulement selon l'une ou plusieurs des revendications précédentes.
